# EUROPEAN PATENT APPLICATION

(11) **EP 2 469 261 A1**
(43) Date of publication of application: **27.06.2012**
(21) Application number: 11187823.7
(22) Date of filing: 04.11.2011
(51) Int. Cl.: G01N 1/10, G01N 30/00, B01J 15/00

(54) **Large-area solid phase extraction apparatus and methods**

(30) Priority: 22.12.2010 US 976019
(71) Applicant: Agilent Technologies, Inc., Santa Clara, CA 95051 (US)
(72) Inventor: Wells, Gregory J., Loveland, CO Colorado 80537-0599 (US); George, John E., Loveland, CO Colorado 80537-0599 (US)
(74) Representative: Grünecker, Kinkeldey, Stockmair & Schwanhäusser

(57) **Abstract**

A solid phase extraction apparatus (400) includes a sample adsorption assembly (440, 740, 940, 1140, 1440) and a needle (408). The adsorption assembly (440, 740, 940, 1140, 1440) includes a housing (458, 758, 958, 1158), a distal housing opening (466), and an adsorption bar (462, 762, 962, 1162, 1362) disposed in the housing (458, 758, 958, 1158). The adsorption bar (462, 762, 962, 1162, 1362) includes an outer surface coated with an adsorption material (576, 776). The adsorption bar (462, 762, 962, 1162, 1362) is located between the distal housing opening (466) and a proximal housing opening (464, 1464). The outer surface is spaced from an inner housing surface (468, 768, 968, 1168), wherein the adsorption assembly (440, 740, 940, 1140, 1440) includes an adsorption region (470, 770, 970) between the inner housing surface (468, 768, 968, 1168) and the outer surface. The adsorption assembly (440, 740, 940, 1140, 1440) establishes a fluid flow path from the distal housing opening (466), through the adsorption region (470, 770, 970) along a longitudinal direction, and to the proximal housing opening (464, 1464). The needle (408) communicates with the distal housing opening (466).

## Description

### TECHNICAL FIELD

The present invention relates generally to solid phase extraction of sample molecules, which finds use for example in fields of analytical chemistry.

### BACKGROUND

Solid phase extraction (SPE) refers to a class of techniques by which analytes (molecules of interest) initially forming a part of a multi-component liquid or gas are isolated and collected from the liquid or gas, and then concentrated and/or purified in preparation for further analysis such as chromatography. SPE techniques are generally known to persons skilled in the art and thus need not be described in detail herein. Briefly, SPE is characterized by the use of a solid material as the stationary phase on which analytes are retained. The degree of affinity an analyte will have for a given solid phase composition depends on the composition or properties of the analyte. The typical mechanism for retention is adsorption. The adsorption material (or sorbent) utilized as the solid phase typically consists of a specified organic functional group bonded to silica. The solid phase is typically provided in a syringe, cartridge, multi-well plate or disk, and the analyte-carrying sample is flowed into contact with the solid phase to effect adsorption. After accumulating on the adsorption material, the retained analytes may then be desorbed by solvent-based elution or thermal desorption (heating) and the desorbed analytes subsequently introduced into an analytical instrument such as a chromatograph.

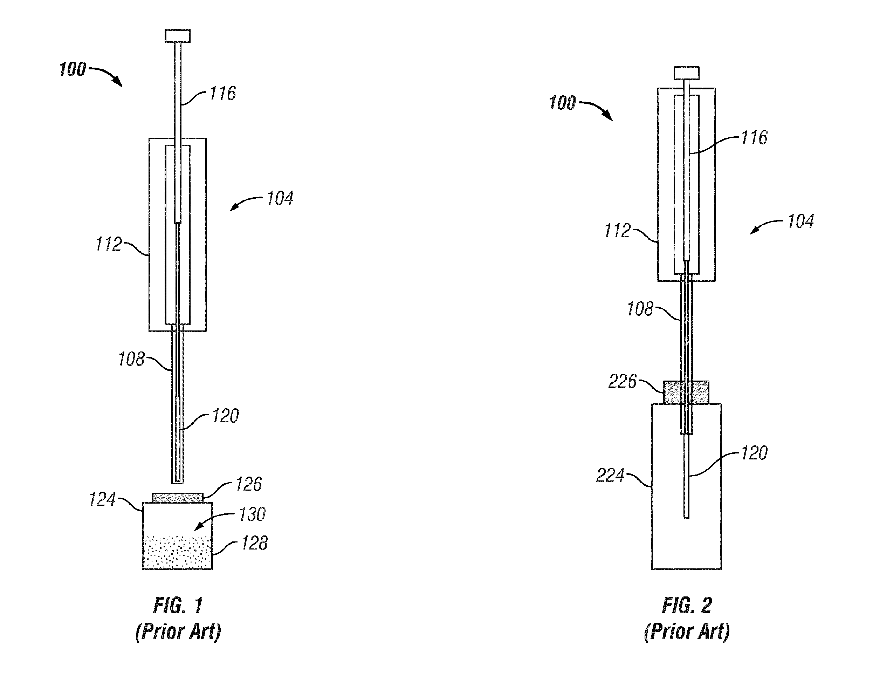

Figures 1 and 2 illustrate an apparatus **100** of known design that may be utilized for solid phase extraction according to a technique known as Solid Phase Micro Extraction, or SPME. The apparatus **100** includes a syringe **104** connected to a needle **108.** The syringe **104** includes a hollow syringe body **112** and a plunger **116** axially movable in the syringe body **112.** A fiber **120** coated with an adsorbent material is connected to the distal end of the plunger **116.** The plunger **116** is utilized to translate the fiber **120** axially through the needle **108,** thus alternately extending the fiber **120** beyond the tip of the needle **108** and retracting the fiber **120** back into the needle **108.** Figure 1 illustrates the apparatus **100** positioned over a typical sample vial **124** sealed at the top by a septum **126.** The sample vial **124** contains a volume **128** of liquid-phase sample matrix and, when sealed, may also contain gas-phase sample molecules in a headspace **130** between the liquid volume **128** and the septum **126.** To extract a sample aliquot from the sample vial **124,** the needle **108** is pushed through the septum **126** into the interior of the sample vial **124** while the fragile fiber **120** is retracted and thereby protected by the needle **108** from damage. The fiber **120** is then extended from the needle **108** into the headspace **130** to adsorb gas-phase sample, or further into the liquid sample matrix **128** to adsorb liquid-phase sample. The fiber **120** is then retracted and the apparatus **100** is moved to an injector (or injection port) **224** of a gas chromatograph (GC), as shown in Figure 2. The adsorbed sample is then introduced into the injector **224** by pushing the needle **108** through a septum **226** of the injector **224** and extending the fiber **120** out from the tip of the needle **108.** The sample material to be analyzed by the GC is then desorbed by thermal desorption in a known manner. This type of apparatus **100** is commercially available and an example is described in U.S. Patent No. 5,691,206. The apparatus **100** is disadvantageous in that the fiber **120** must be small enough to fit inside the needle **108,** and the outer diameter of the needle **108** must be small enough to routinely penetrate septa such as provided with sample vials, GC injectors, and the like. The sensitivity of this technique is therefore limited by the small surface area presented by the fiber 120, which necessarily limits the area available for providing an adsorbent material for extracting molecules of interest from the sample matrix.

Another technique known as Solid Phase Dynamic Extraction, or SPDE, is commercially available from Chrom Tech, Inc. Unlike SPME, SPDE utilizes a needle in which the inside surface is coated with a bonded phase adsorption material. Like SPME, the needle must have an outer dimension small enough to routinely penetrate a septum on the sample vial and the injector. The sensitivity of this technique is therefore limited by the small surface area of the inside surface of the needle. A further limitation relates to the effect of having the entire length of the inner surface of the needle coated with the adsorption media. Sample will be adsorbed along the entire length. However when the sample is released by thermal desorption the entire length is not uniformly heated by the injector. The portion inside of the injector will be heated, but the distal end nearest the syringe body will still be outside of the injector and close to room temperature. The result will be a non-uniform release of the adsorbed sample due to the temperature gradient.

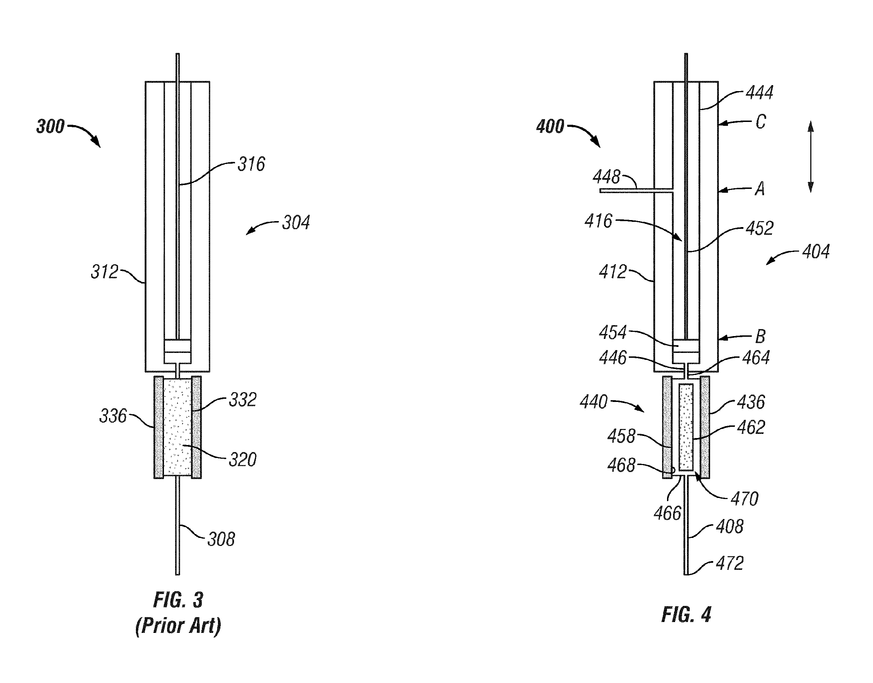

Figure 3 illustrates another apparatus **300** of known design in which a tube **332** is interposed between a syringe **304** and a needle **308.** The inside of the tube **332** is filled with a packing material **320** and the outside is surrounded by a heating device **336.** The packing material **320** constitutes a mass of particles or beads coated with an adsorbent material, similar to the stationary phase utilized in chromatographic columns. In use, the needle **308** is inserted into a gas-phase sample whereby the sample vapor is drawn into the interstices of the packing material **320.** When a sufficient amount of the sample has been adsorbed onto the packing material **320,** the apparatus **300** is moved to the injector of a GC and the needle **308** is inserted into the injector. The packing material **320** is heated to remove the sample from the packing material **320** by thermal desorption and a flow of gas is utilized to transport the desorbed sample into the injector and subsequently into the GC column. This type of apparatus **300** is commercially available from CTC Analytics AG, Switzerland, and the technique is known as In-Tube Extraction or ITEX. An example is described in U.S. Patent App. Pub. No. US 2007/0113616. This technique cannot be utilized with samples containing a dirty matrix or particulates, i.e., a matrix containing solid impurities, because the matrix will plug the packing material **320.**

Another apparatus of known design utilizes a collecting element such as a magnetic stirring bar, rod, ball, or wire that is coated with an adsorbent material. The stirring bar is placed in contact with a sample solution and the sample solution is agitated by rotating the stirring bar in the solution or alternatively by ultrasonic means. The agitation allows for a more uniform adsorption of the sample which is otherwise limited by the rate of diffusion of the sample to the adsorption element. Such a system is commercially available from Gerstel Inc. USA under the name Twister®. An example is described in U.S. Patent No. 6,815,216. After the sample is extracted, the extraction element (coated stirring bar, ball, wire, etc.) must be dried and transported to a sealed chamber and the sample is thermally desorbed and transported by a gas stream into a GC for analysis.

In view of the foregoing, there is an ongoing need for providing improved apparatus and methods for implementing solid phase extraction. In particular, there is a need for providing a larger surface area available for adsorption and increasing the efficiency and sensitivity of the extraction process.

### SUMMARY

To address the foregoing problems, in whole or in part, and/or other problems that may have been observed by persons skilled in the art, the present disclosure provides methods, processes, systems, apparatus, instruments, and/or devices, as described by way of example in implementations set forth below.

According to one implementation, a solid phase extraction apparatus includes a sample adsorption assembly and a needle. The sample adsorption assembly includes a housing, a proximal housing opening configured for communicating with a fluid moving device, a distal housing opening located at a distance from the proximal housing opening, and an adsorption bar disposed in the housing. The adsorption bar includes an outer surface and an adsorption material coating the outer surface. The adsorption bar has a predominant length in a longitudinal direction, and is located between the proximal housing opening and the distal housing opening. The outer surface is spaced from an inner housing surface of the housing, wherein the sample adsorption assembly includes a sample adsorption region between the inner housing surface and the outer surface. The sample adsorption assembly establishes a fluid flow path from the distal housing opening, through the sample adsorption region along the longitudinal direction, and to the proximal housing opening. The needle communicates with the distal housing opening and is disposed outside the housing.

In some implementations, the adsorption bar may be composed of a metal and an adsorption-reducing film covers the outer surface, in which case the adsorption material coats the adsorption-reducing film.

In some implementations, the adsorption material coats an area of a surface of the sample adsorption assembly, such as for example the outer surface of the adsorption bar, that is 50 mm² or greater.

In some implementations, the inner housing surface may be composed of a metal and an adsorption-reducing film covers the inner housing surface.

In some implementations, the inner housing surface is also coated with the adsorption material such that analytes may be retained on both the adsorption bar and the inner housing surface.

According to another implementation, a method is provided for extracting analytes from a sample matrix. A needle of a solid phase extraction apparatus is inserted into a sample matrix. The solid phase extraction apparatus includes a housing communicating with the needle, and an adsorption bar disposed in the housing and coated with an adsorption material. At least a portion of the sample matrix is flowed through the needle, into an adsorption region between the adsorption bar and the housing, and into contact with the adsorption material, wherein analytes of the sample matrix are retained on the adsorption material. The needle is inserted into an analyte receptacle. The analytes are desorbed from the adsorption material. The desorbed analytes are transferred to the analyte receptacle by flowing a carrier fluid through the housing and the needle.

In some implementations, the analyte receptacle may be a chromatograph, such as a liquid chromatograph (LC) or a gas chromatograph (GC).

In some implementations, the sample matrix flowed through the needle may be a liquid-phase sample matrix. In other implementations, the sample matrix flowed through the needle may be a gas-phase sample matrix.

In some implementations, flowing the sample matrix into the adsorption region is done by translating a plunger axially through a body of the solid phase extraction apparatus communicating with the housing, such as by operating a syringe.

In some implementations, before desorbing, non-retained components of the sample matrix may be purged from the housing and the needle by flowing a wash fluid through the housing and the needle. Purging may further include, after flowing the wash fluid, flowing a purge gas through the housing and the needle. The purge gas may be heated prior to or during flowing the purge gas through the housing and the needle.

In some implementations, before desorbing, non-retained components of the sample matrix may be purged from the housing and the needle by flowing a purge gas through the housing and the needle. After purging, the purge gas may continue to flow while desorbing the analytes and transferring the analytes to the analyte receptacle, such that the purge gas may be utilized as the carrier fluid for transferring the analytes.

In some implementations, desorbing includes heating the retained analytes. In other implementations, the carrier fluid includes an elution solvent and desorbing includes flowing the elution solvent into contact with the adsorption material.

In some implementations, the adsorption bar includes a plurality of adsorption bar segments that include respective adsorption materials of different compositions. The sample matrix is flowed into contact with each respective adsorption material, wherein analytes of different compositions of the sample matrix are retained on the respective adsorption materials.

Other devices, apparatus, systems, methods, features and advantages of the invention will be or will become apparent to one with skill in the art upon examination of the following figures and detailed description. It is intended that all such additional systems, methods, features and advantages be included within this description, be within the scope of the invention, and be protected by the accompanying claims.

### BRIEF DESCRIPTION OF THE DRAWINGS

The invention can be better understood by referring to the following figures. The components in the figures are not necessarily to scale, emphasis instead being placed upon illustrating the principles of the invention. In the figures, like reference numerals designate corresponding parts throughout the different views.

Figure 1 is an elevation view of an apparatus of known design that may be utilized for Solid Phase Micro Extraction (SPME), with the apparatus positioned over a sample vial containing a sample matrix.

Figure 2 is another elevation view of the SPME apparatus illustrated in Figure 1, with the apparatus inserted into an injector of a gas chromatograph (GC).

Figure 3 is an elevation view of another apparatus of known design that may be utilized for In-Tube Extraction (ITEX).

Figure 4 is an elevation view of an example of a solid phase extraction (SPE) apparatus, including a sample adsorption assembly, according to an implementation of the present teachings.

Figure 5 is an elevation view of an example of an adsorption bar that may be provided with the apparatus illustrated in Figure 4.

Figure 6 is an end view of the adsorption bar illustrated in Figure 5.

Figure 7 is an elevation view of another example of a sample adsorption assembly including another example of an adsorption bar.

Figure 8 is an end view of the adsorption bar illustrated in Figure 7.

Figure 9 is an elevation view of another example of a sample adsorption assembly.

Figure 10 is a cross-sectional view of the sample adsorption assembly illustrated in Figure 9.

Figure 11 is an elevation view of another example of a sample adsorption assembly.

Figure 12 is a cross-sectional view of the sample adsorption assembly illustrated in Figure 11.

Figure 13 is an elevation view of another example of an adsorption bar.

Figure 14 is a cross-sectional view of another example of a sample adsorption assembly and a syringe.

### DETAILED DESCRIPTION

In the context of the present disclosure, the term "fluid" refers generally to liquid-phase materials and gas-phase materials, unless a liquid-phase material or a gas-phase material is specifically indicated. The terms "liquid-phase" and "liquid," and "gas-phase" and "gas," are used interchangeably. A liquid-phase material or liquid may be any liquid, such as a solution, suspension, slurry, multi-phase mixture or the like, and may include gaseous components (e.g., bubbles) and/or solid components (e.g., particles). A gas-phase material or gas may be any gas or vapor, and may include liquid components (e.g., droplets) and/or solid components (e.g., particles).

In the context of the present disclosure, the term "analyte" refers generally to any sample molecule of interest—that is, a molecule on which an analysis is desired such as a chromatographic analysis.

In the context of the present disclosure, the term "sample matrix" refers to any combination of analytes and non-analytes. The combination of analytes and non-analytes may exist in a liquid phase and/or a gas phase. "Non-analytes" in this context refer to components of the sample matrix for which analysis is not of interest because such components do not have analytical value and/or impair the analysis of the desired analytes. Examples of non-analytes include water, oils, or other media in which the analytes may be found, as well as solvents, buffers, reagents, and various solid particles such as excipients, precipitates, fillers, and impurities.

Figure 4 is a cross-sectional elevation view of an example of a solid phase extraction (SPE) apparatus **400** (or system, device, instrument, etc.) according to an implementation of the present teachings. The SPE apparatus **400** generally includes a device or means for moving fluid, a sample adsorption assembly **440,** and a needle **408.** As a typical implementation yet a non-limiting example, the fluid moving device illustrated in Figure 4 may be a syringe **404** (or syringe assembly) that includes a hollow syringe body **412** and a plunger **416** configured to translate or reciprocate axially through the syringe body **412.** In the illustrated example, the syringe **404,** sample adsorption assembly **440** and needle **408** are generally disposed along a longitudinal axis of the SPE apparatus **400,** in which case the plunger **416** is movable in the longitudinal direction as indicated by an arrow. The hollow syringe body **412** defines an axial syringe bore **444.** The syringe **404** includes a proximal syringe end and an axially opposite distal syringe end. A distal syringe opening **446** communicating with the interior of the syringe body **412** (the syringe bore **444)** is located at the distal syringe end. In addition, a fluid inlet **448** may be formed through the syringe body **412** in communication with the syringe bore **444** and configured for connection with a fluid supply (not shown) for flowing a purge gas, carrier gas or the like through the syringe **404.** In the illustrated example, the fluid inlet **448** has been located at an arbitrary axial distance from the distal syringe opening **446** and oriented in a transverse direction (orthogonal to the longitudinal axis). The plunger **416** includes a plunger shaft **452** connected to a plunger head **454.** The plunger head **454** may have a diameter slightly less than the inside diameter of the syringe bore **444,** whereby the plunger head **454** is able to move through the syringe bore **444** while serving as a fluid-tight seal between the variable-volume upper and lower regions of the syringe bore **444** demarcated by the movable plunger head **454.**

The plunger **416** (plunger head **454)** may generally be movable to any position within the syringe bore **444.** For descriptive purposes, Figure 4 illustrates three positions of interest, positions A, B and C. At position A, the plunger head **454** is axially distant from the distal syringe opening **446,** but is between the fluid inlet **448** and the distal syringe opening **446** such that fluid flow from the fluid inlet **448** to the distal syringe opening **446** is not permitted. At position B, the plunger head **454** is axially proximate to the distal syringe opening **446** and still prevents fluid flow from the fluid inlet **448** to the distal syringe opening **446.** At position C, the plunger head **454** is axially distant from the distal syringe opening **446** by a greater extent than position A and is no longer between the fluid inlet **448** and the distal syringe opening **446,** such that position C allows fluid flow from the fluid inlet **448** to the distal syringe opening **446.**

The sample adsorption assembly **440** includes a housing **458** and a sample adsorption bar **462** disposed in the housing **458.** The housing **458** may generally be configured as any enclosure elongated (having a dominant dimension) along the longitudinal axis, such as a tube. At its respective axial ends, the housing **458** includes a proximal housing opening **464** and a distal housing opening **466.** Depending on design, the proximal housing opening **464** and the distal syringe opening **446** may be the same opening or, as illustrated, may be separate openings. The sample adsorption assembly **440** may be mounted or attached to the syringe **404** by any suitable means that places the proximal housing opening **464** in communication with the syringe bore **444,** and may be removable from the syringe **404** to enable cleaning, replacement, etc., as well as access to the adsorption bar **462.** A portion of the housing **458** at its proximal end may be removable (not shown) to enable access into the interior of the housing **458** for loading and removal of the adsorption bar **462.** The housing **458** may be constructed from any material suitable for SPE such as, for example, an inert ceramic or glass such as fused silica or a metal such as stainless steel. Generally, metal is relatively easy to fabricate and handle and thus may be preferred in many applications. The housing **458** includes an inner surface **468** that surrounds the adsorption bar **462.** In some implementations, the inner housing surface **468** may be coated with a coating (layer, film, etc.) having a composition that reduces sample adsorption on metal surfaces, for example a silicon oxide based composition such as provided in UltiMetal® products commercially available from Varian, Inc., Palo Alto, California. In typical yet non-limiting implementations contemplated for the present teachings, the housing **458** may have an inside diameter ranging from about 2-4 mm and a wall thickness sufficient to provide mechanical strength such as ranging from about 0.25-1.0 mm.

Generally, the adsorption bar **462** is positioned in a manner that allows fluid to flow through the distal housing opening **466,** between the adsorption bar **462** and the inner housing surface **468,** and through the proximal housing opening **464** / distal syringe opening **446** without obstruction. The adsorption bar **462** may be fixed in position in the housing **458** by any suitable means, a few examples of which are described below. The adsorption bar 462 is not required to be fixed in a completely stationary position, i.e., some degree of movement may be permitted, so long as the adsorption bar **462** does not obstruct fluid flow. In typical yet non-limiting implementations contemplated for the present teachings, the adsorption bar **462** may have a length (in the longitudinal direction) ranging from about 20-40 mm, and a characteristic dimension in the transverse direction (e.g., diameter, or other dimension depending on shape) ranging from about 2-4 mm. The diameter of the adsorption bar **462** is less than that of the inner housing surface **468,** whereby an annular sample adsorption region **470** is defined by the radial gap between the adsorption bar **462** and the inner housing surface **468.** The resulting cross-sectional flow area of the sample adsorption region **470** is sized so as to permit sample matrix (liquid or gas) to flow through the housing **458** while ensuring a good opportunity for analytes of the sample matrix to come into contact with the adsorption material of the adsorption bar **462** and be retained thereon.

The sample adsorption assembly **440** may also include a heating device **436** of any type suitable for effecting thermal desorption of analytes retained by the adsorption bar **462** or for other heating purposes. In the illustrated example, the heating device **436** surrounds an outer surface of the housing **458** and includes a resistive heating material through which an electrical current is run in a manner appreciated by persons skilled in the art.

The needle **408** is hollow and includes an open proximal end communicating with the distal housing opening **466** and an axially opposite, open distal end or needle tip **472.** The needle **408** may have the same composition as the housing **458** or a different composition and may be joined to the housing **458** by any suitable means. In one example, the needle **408** is composed of a metal and is joined to the housing **458** by brazing. The inner surface of the needle **408** may be coated with an adsorption-reducing composition as in the case of the housing **458.** In typical implementations, the needle **408** is sized to facilitate its repeated use in penetrating the septa of components such as the sample vials and sample injectors typically utilized in chromatography. As an example, the inside diameter of the needle **408** may range from about 0.25-0.50 mm and a wall thickness ranging from about 0.05-0.10 mm.

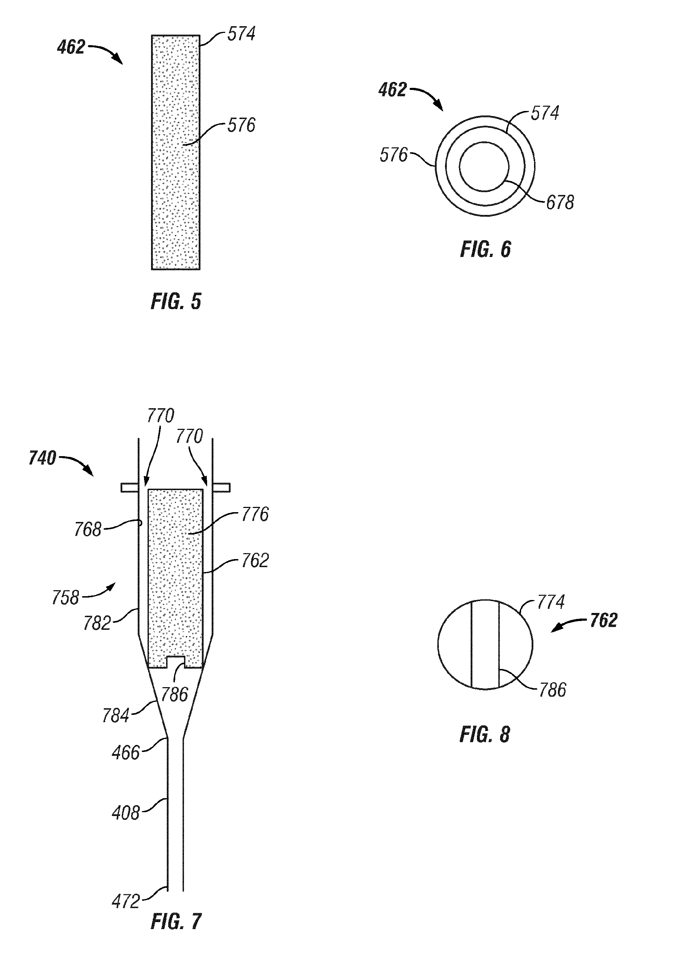

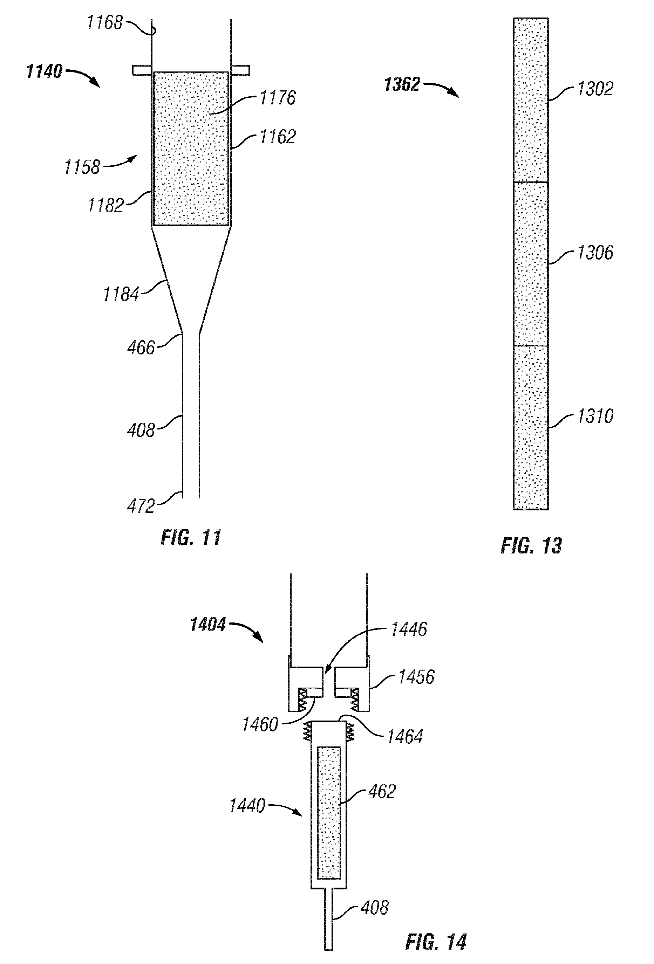

Figure 5 is an elevation view of an example of the adsorption bar **462,** and Figure 6 is an end view of the adsorption bar **462.** The adsorption bar **462** generally includes a substrate **574** that is coated with a sample adsorption material (or stationary phase) **576.** The term "coated" is not meant to be limiting and generally encompasses any means by which the adsorption material **576** may be deposited onto the substrate **574** in a uniform, stable and permanent manner, which may entail chemical bonding or other type of bonding or adhering. In some implementations, the substrate **574** is a monolithic structure that presents a contiguous outer surface on which the sample adsorption material **576** is disposed as a uniform or substantially uniform layer. In other implementations, the adsorption bar **462** may be partitioned into two or more adjacent units as described below and illustrated in Figure 13. The structure of the substrate **574** is preferably configured so as to maximize the surface area to which the adsorption material **576** may be applied, thereby maximizing the area of the adsorption material **576** to which the sample matrix is exposed and in turn maximizing the sensitivity of the SPE apparatus **400** as a means for extracting analytes from the sample matrix. In the illustrated example, the substrate 574 is a cylinder elongated along the longitudinal axis. The adsorption material **576** coats at least the cylindrical outer surface of the substrate **574.** The adsorption material **576** may be any material utilized for extraction of analytes from sample matrices, one non-limiting example being polydimethyl siloxane. As appreciated by persons skilled in the art, a wide range of compositions may be utilized as the adsorption material **576** in dependence on the type of sample matrix, the type of analytes to be extracted from the sample matrix, the type of SPE being performed (e.g., normal phase, reversed phase, ion exchange, etc.), etc. The substrate **574** may be constructed from any material to which the adsorption material **576** of a desired composition may be applied as a permanent, stable coating. As non-limiting examples, the substrate **574** may be fused silica or a metal such as stainless steel. In the case of metal, the surfaces of the substrate **574** may be coated with an adsorption-reducing coating as described above. In this case, the adsorption material **576** is disposed on the adsorption-reducing coating and the adsorption-reducing coating is in turn disposed on the metallic surface(s) of the substrate **574.**

As also shown in Figure 6, in some implementations the substrate **574** may be configured as a hollow cylinder or tube, in which case the substrate **574** has an inner surface **678** defining a conduit through the substrate **574.** The conduit may be sized large enough to permit the flow of liquid through the substrate **574,** particularly a "dirty" sample matrix that includes non-analytical particulates or other solid impurities. In addition to the outer surface of the substrate **574,** the inner surface **678** of the substrate **574** may likewise be coated with the adsorption material **576** whereby analytes from the portion of the sample matrix flowing the conduit may be retained. Thus, a tubular configuration of the substrate **574** may further increase the large surface area provided by the adsorption bar **462** for extraction of analytes. Additionally or alternatively, the inner housing surface **468** (Figure 4) may be coated with the adsorption material **576** as a means for further increasing the surface area on which analytes may be retained.

Figure 7 is an elevation view of another example of a sample adsorption assembly **740.** The sample adsorption assembly **740** includes a housing **758** and an adsorption bar **762** with an outer surface **774** coated with an adsorption material **776,** and may also include a heating device (not shown). As in the above-described implementation illustrated in Figure 4, the housing **758** includes a main section **782** with an inside housing surface **768** having a large enough inside diameter to provide an adsorption region **770** between the inside housing surface **768** and the adsorption bar **762** and elongated along the longitudinal axis. As in the case of the housing **458** illustrated in Figure 4, the inside diameter of the main section **782** may be constant or substantially constant along the longitudinal direction. The housing **758** in the present example also includes a tapered section **784** interposed between the main section **782** and the needle **408.** At the junction with the main section **782,** the inside diameter of the tapered section **784** is equal or substantially equal to that of the main section **782.** Along the longitudinal direction toward the needle **408,** the inside diameter of the tapered section **784** reduces down to that of the distal housing opening **466** where the tapered section **784** adjoins the needle **408.** Hence, the inside diameter of the tapered section **784** at the distal housing opening **466** is equal or substantially equal to that of the needle **408.** The tapered section **784** may be useful for facilitating the transition of fluid flow between the main section **782** and the needle **408** as there is a significant difference in the respective inside diameters of these components.

The tapered section **784** may also serve to prevent the adsorption bar **762** from obstructing fluid flow into the needle **408,** particularly in a case where the adsorption bar **762** is not completely stationary and fluid is flowing in the direction of the needle **408.** As shown in Figure 7, the distal end of the adsorption bar **762** may contact (or may be supported by) the inside surface of the tapered section **784.** Because in this case the entire periphery of the adsorption bar **762** contacts the inside surface, a channel **786** may be formed in the distal end of the adsorption bar **762.** Figure 8 is an end view of the adsorption bar **762** illustrating the entire channel **786.** The channel 786 may be oriented in the transverse direction to provide one or more openings (and hence fluid communication) between the region of the housing **758** below the distal end of the adsorption bar **762** and the sample adsorption region **770.** Consequently, one or more fluid flow paths are defined from the distal housing opening **466** (and from the needle **408),** through a portion of the tapered section **784** to the channel **786** generally in the longitudinal direction, through the channel **786** in an outward radial or transverse direction to the opening(s) and into the sample adsorption region **770,** and through the sample adsorption region **770** in the longitudinal direction toward the syringe **404** (Figure 4), and vice versa from the syringe **404** toward the needle **408.**

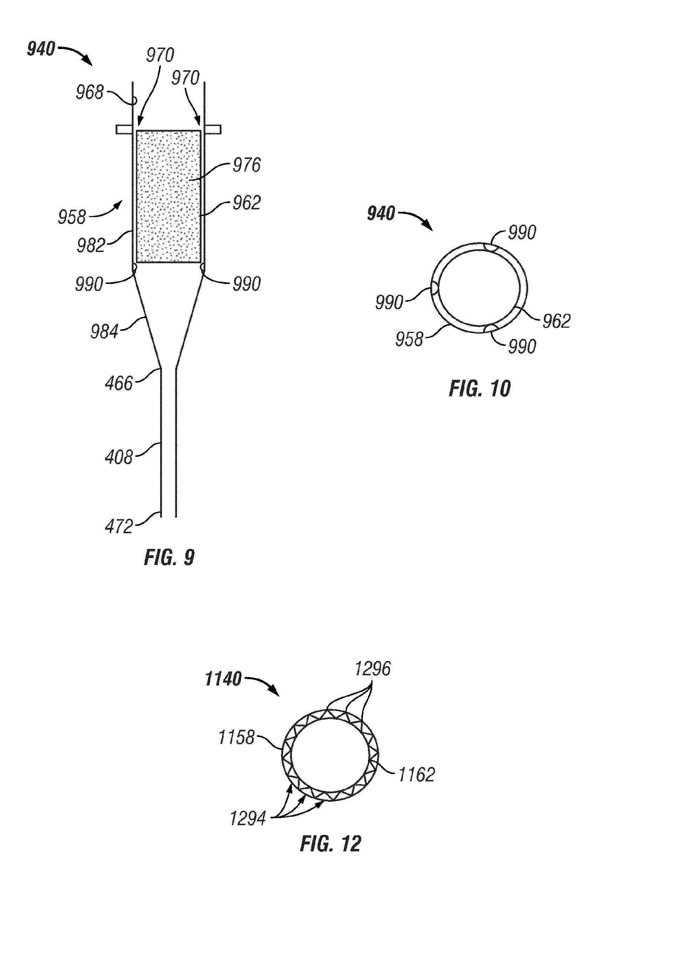

Figure 9 is an elevation view of another example of a sample adsorption assembly **940,** and Figure 10 is a cross-sectional view of this sample adsorption assembly **940.** The sample adsorption assembly **940** includes a housing **958** and an adsorption bar **962** coated with an adsorption material **976,** and may also include a heating device (not shown). The housing **958** includes an inside housing surface **968** having a large enough inside diameter to provide an adsorption region **970** between the inside housing surface **968** and the adsorption bar **962** and elongated along the longitudinal axis. The housing **958** may or may not include a main section **982** and a tapered section **984.** In the present example, however, one or more detents **990** (protrusions, tabs, etc.) extend in an inward radial direction from the inner housing surface **968.** The adsorption bar **962** may contact the detent(s) **990.** The detents **990** extend far enough into the interior of the housing **958** to support the adsorption bar **962**, yet are small enough not to impair fluid flow through the housing **958** around the adsorption bar **962** (i.e., through a sample adsorption region **970**). The detents **990** are thus another example of a means for preventing obstruction of fluid flow. In other implementations, detents could be provided to contact the other end of the adsorption bar **962**, particularly if removability of the adsorption bar **962** is not desired, but as noted above the adsorption bar **962** is not required to be completely stationary.

Figure 11 is an elevation view of another example of a sample adsorption assembly **1140**, and Figure 12 is a cross-sectional view of this sample adsorption assembly **1140**. The sample adsorption assembly **1140** includes a housing **1158** with an inner housing surface **1168** surrounding an adsorption bar **1162** coated with an adsorption material **1176**, and may also include a heating device (not shown). The housing **1158** may or may not include a main section **1182** and a tapered section **784**. The adsorption bar **1162** is fluted so as to provide a plurality of circumferentially spaced channels **1294** running in the longitudinal direction. The channels **1294** may be realized by, for example, forming longitudinal grooves in the outer surface of the adsorption bar **1162** or, as illustrated, by providing a plurality of circumferentially spaced splines **1296** extending in the radial direction outward from the outer surface of the adsorption bar **1162** and running along the length of the adsorption bar **1162** whereby each channel **1294** is defined between a pair of adjacent splines **1296**. The splines **1296** may be formed, for example, by pulling the substrate of the adsorption bar **1162** through a die or broach as appreciated by persons skilled in the art. In this implementation, the splines **1296** may extend proximate to or into contact with the inner housing surface **1168**, whereby the outer surfaces of the splines **1296** and the inner housing surface **1168** cooperatively define the sample adsorption region. The channels **1294** establish a plurality of fluid flow paths from the distal housing opening **466** (and from the needle **408**), through a portion of the housing interior below the adsorption bar **1162** (which may be a tapered section **1184** as in the illustrated example) to the channels **1294**, through the channels **1294** in the longitudinal direction, and toward the distal syringe opening **446** (Figure 4). By providing splines **1296** (or, alternatively, grooves), the surface area provided by the adsorption bar **1162** available for extraction of analytes may be further increased. Moreover, the splines **1296** prevent obstruction of fluid flow by the adsorption bar **1162**.

Figure 13 is an elevation view of another example of an adsorption bar **1362**. In this example, the adsorption bar **1362** is realized by a longitudinally stacked arrangement of adsorption bar segments or units **1302, 1306, 1310** with each segment **1302, 1306, 1310** constituting an individual adsorption bar. Each segment **1302, 1306, 1310** includes a substrate segment coated with an adsorption material. The composition of the adsorption material of each substrate segment **1302, 1306, 1310** may be different from the other adsorption materials. This configuration enables a wide range of samples and a multitude of different chemical classes of sample molecules to be simultaneously adsorbed and concentrated. The stacked adsorption bar **1362** may be utilized in any implementation provided in accordance with the present teachings, including those illustrated by example in Figures 4-12.

It will be understood that the adsorption bars illustrated in Figures 7-13 may also include an inner conduit **678** as illustrated in Figure 6. More generally, one or more features of the adsorption bars illustrated in Figures 4-12 may be combined as desired for particular applications.

Figure 14 is a cross-sectional view of another example of a sample adsorption assembly **1440** and a syringe **1404.** The sample adsorption assembly **1440** includes threads at a proximal housing opening **1464** and the syringe **1404** includes an end portion **1456** with threads at a distal syringe opening **1446.** The sample adsorption assembly **1440** may thus be removably secured to the syringe **1404** by threaded engagement. A seal **1460** may be provided at the interface. This configuration thus facilitates removal of the sample adsorption assembly **1440** for cleaning, replacement of the adsorption bar, etc.

Methods for separating (or extracting) analytes from a sample matrix will now be described primarily with reference to Figures 4-6, with the understanding that the implementations illustrated in Figures 7-14 may also be utilized to carry out the methods.

According to one method, a sample container **124** such as illustrated in Figure 1 is provided. The sample container **124** contains a volume **128** of liquid sample matrix and is sealed by a septum **126.** Volatile analyte molecules and other gaseous components of the sample matrix may also be present in the headspace **130** between the surface of the liquid **128** and the underside of the septum **126.** The SPE apparatus **400** is positioned over the sample container **124** and its plunger **416** is initially positioned at a lower position such as position B. The SPE apparatus **400** is then moved downward such that the needle **408** penetrates the septum **126** and the needle tip **472** reaches the headspace **130** or the liquid **128,** depending on whether a gaseous or liquid sample aliquot is to be taken. A sample aliquot is then taken by retracting the plunger **416** upward such as to position A, thereby flowing a portion of the sample matrix through the needle **408** and through the housing **458.** As the sample matrix flows through the housing **458** and around the adsorption bar **462,** it comes into contact with the adsorption material **576** located on the outer surface of the adsorption bar **462.** Consequently, analyte molecules from the liquid-phase or gas-phase sample matrix become partitioned onto the adsorption material **576** and accumulate according to mechanisms understood by persons skilled in the art. In the case where the adsorption bar **462** has an inner conduit whose inner surface **678** is also coated with the adsorption material **576** (Figure 6), the sample matrix also flows through the inner conduit whereby analyte molecules come into with the adsorption material **576** of the inner conduit and are retained thereon in a like manner. In the case where the inner housing surface **468** is coated with the adsorption material **576,** analyte molecules from the sample matrix flowing through the adsorption region **470** between the adsorption bar **462** and the inner housing surface **468** are retained on the inner housing surface **468** as well as on the adsorption bar **462.**

In some methods, while the sample matrix is being drawn from the sample container **124** and separation of the analytes from the sample matrix is occurring, the sample matrix in the sample container **124** may be agitated by any suitable means, such as by utilizing a magnetic stirring bar, an ultrasonic device, or a device creating a circular or vortex motion in the sample container **124.** Agitation may be desired for ensuring uniform sampling of the bulk liquid or vapor in the sample container **124,** and may be particularly useful as the size of the sample container **124** is increased.

Also while the separation of the analytes from the sample matrix is occurring, the amount of analytes in the liquid or vapor in the immediate region of the adsorption bar **462** will decrease. In some methods, to increase the amount of analytes that come into contact with the adsorption material **576** and thus increase the amount of analytes retained, the plunger **416** may periodically be moved to position B and back to position A.

After an appropriate period of time is allotted for partitioning and retention of the analytes on the adsorption material **576,** the needle **408** may be removed from the sample container **124** and the SPE apparatus **400** may be moved to an analyte receptacle into which the collected analytes are to be transferred. As examples, the analyte receptacle may be the injector of an LC or GC (e.g., the injector **224** of Figure 2), or alternatively may be another container. In some methods, prior to transferring the analytes to the analyte receptacle, the non-analytical components of the sample matrix may be purged from the SPE apparatus **400** and the analytes desorbed from the adsorption material **576** such as by thermal desorption or liquid desorption. In the illustrated example, the analytes are transferred by moving the plunger **416** through the syringe **404** to displace the analytes into the analyte receptacle.

In some implementations, after the analytes have been adsorbed, the adsorption bar **462** and other components of the sample adsoption assembly **440** may be washed to remove the non-retained components of the sample matrix by flowing a suitable wash solvent through the sample adsorption assembly **440.** Washing is particularly useful when extracting analytes from a dirty sample matrix. As an example, the SPE apparatus **400** may be moved from the sample container **124** and the needle **408** inserted into a container of wash solvent. The wash solvent may be flowed through the needle **408** and the sample adsorption assembly **440** by cycling the plunger **416** between positions A and B. Subsequently, a purge gas (i.e., an inert gas such as, for example, nitrogen) may be flowed through the sample adsorption assembly **440** to dry the rinsed components. For instance, the gas inlet **448** of the syringe **404** may be connected to a supply of purge gas and the plunger **416** moved to position C to allow communication between the gas inlet **448** and the distal syringe opening **446.** The purge gas is then flowed from the gas inlet **448** into the syringe **404,** and through the syringe **404,** housing **458,** and needle **408.** Depending on the volatility of the sample matrix, drying may be facilitated by heating the housing **458** such as by operating the heating device **436.** If the sample matrix was extracted from the headspace **130** of the sample container **124,** i.e. is gaseous, the drying step need not be performed. If, however, a washing step occurs after extracting a gaseous sample, the drying step may be desirable to remove excess liquid, particularly if the wash solvent is aqueous and there is a risk of loss of adsorption material **576** via hydrolysis. Similarly, in the case of a sample matrix that is an aqueous solution, the drying step may be desirable even if no washing step is done, for the purpose of removing excess aqueous solution.

In some methods, if the purge gas is utilized it may also serve as a carrier gas for transferring the analytes into the analyte receptacle in conjunction with thermal desorption. For example, the needle **408** may be repositioned into a chromatograph injector (such as the GC injector **224** illustrated in Figure 2) while the purge gas is still flowing, and the temperature of the adsorption material **576** in the sample adsorption assembly **440** may be increased to a value sufficient to desorb the analytes from the adsorption material **576.** The illustrated heating device **436** may be utilized for this purpose. Desorbed analytes become entrained in the purge gas (carrier gas) and thereby flowed through the needle **408** and into the injector.

Alternatively, carrier gas residing in the injector may be utilized to transfer the desorbed analytes into the injector instead of flowing a purge gas through the SPE apparatus **400** from the gas inlet **448** of the syringe **404.** In this case, the needle **408** is inserted into the injector and the plunger **416** is pulled up while heating the sample adsorption assembly **440.** In this manner, carrier gas from the injector is pulled into the housing **458** where it entrains the desorbed analytes. The plunger **416** is then pushed down to force the analyte-laden carrier gas into the injector.

As an alternative to thermal desorption, liquid desorption may be performed to elute the analytes into a suitable elution solvent. For instance, after the washing/drying step the needle **408** may be repositioned into another container containing the elution solvent. A portion of the elution solvent is drawn into the sample adsorption assembly **440** such as by retracting the plunger **416** to position A. The analytes will partition from the adsorption material **576** into the elution solvent. The resulting sample solution may then be injected into an LC for analysis, or alternatively into another container for subsequent injection into a GC using a standard liquid syringe. A heater provided with the GC injector may be utilized to vaporize the sample solution.

From the foregoing description it can be seen that, for any given aliquot of sample matrix, whether liquid-phase or gas-phase, the presently disclosed SPE apparatus **400** provides a significantly increased surface area for adsorption of analytes as compared to known apparatus. As a comparative example, the adsorption fiber **120** described above and illustrated in Figures 1 and 2 is typically 0.20 - 0.30 mm in diameter and 10 mm in length. The dimensions of the adsorption bar **462** (or **762, 962, 1162)** may be significantly larger in part because it is not constrained to be located inside of and movable through the needle **408,** or to be formed as one of many small particles making up a packed mass **320** as in the apparatus **300** illustrated in Figure 3. Again referring to the non-limiting example given above, the adsorption bar **462** may be 2-4 mm in diameter (or other characteristic dimension in the transverse direction) and 20-40 mm in length. In comparison to the fiber **120,** the surface area available for adsorption may thus be increased by a factor of about 20 times to over 50 times for this particular example of the adsorption bar **462.** In some implementations, the outer surface of the adsorption bar **462** has a transverse dimension (e.g., diameter) that is greater than the inside diameter of the needle **408** by a factor of at least two. In some implementations, the amount of surface area of the sample adsorption assembly **440** that is covered by the adsorption material **576** is 50 mm² or greater. This surface area may include all or part of the outer surface area of the adsorption bar **462.** It may additionally include all or part of the surface area of the inner surface **678** of the adsorption bar **462** (if provided), and/or all or part of the surface area of the inner housing surface **468.**

An additional advantage is evident when sampling gas molecules from the headspace **130** above the liquid volume **128** of a sample container **124** as shown in Figure 1. It can be seen that the height of the headspace **130,** i.e. the distance between the surface of the liquid **128** and the septum 126, can be quite limited. Hence, the extent to which the conventional adsorption fiber **120** can be inserted into the headspace **130** without contacting the liquid **128** is likewise quite limited. As a result, the gas molecules in the headspace **130** may be exposed to only a portion of the fiber **120,** which limits the adsorption capability and consequently the sensitivity of the apparatus **100** shown in Figures 1 and 2. By contrast, the sample adsorption assembly **440** (or **740, 940, 1140)** of the SPE apparatus **400** taught in the present disclosure provides a large sample adsorption region **470** (or **770, 970,** or channels **1294)** into which sample gas molecules are flowed through the needle **408.** By dynamically extracting vapor from the headspace **130** of the sample container **124** and into the large sample adsorption region **470** outside of the sample container **124,** rather than inserting an adsorption fiber **120** into the headspace **130,** more analytes can be adsorbed from the vapor of the headspace **130** due to the larger surface area of the adsorption bar **462** (and of the inner housing surface **468,** if also provided with adsorption material **576).** The sensitivity of the SPE apparatus **400** as an instrument for extraction of analytes is therefore significantly increased.

Moreover, the sample adsorption region **470** (or **770, 970,** or channels **1294)** of the presently disclosed SPE apparatus **400** (which may also include an inner conduit through the adsorption bar **462, 762, 962, 1162** as described above) establishes one or more geometrically simple and fluid mechanically simple flow paths through the sample adsorption assembly **440** (or **740, 940, 1140).** This configuration increases the opportunity for analytes to come into contact with the adsorption material **576** and be retained thereon, and facilitates displacement of liquid-phase and/or gas-phases both into and out from the sample adsorption assembly **440.** This configuration is in contrast to apparatus **300** such as illustrated in Figure 3 in which fluids must be forced through labyrinthine paths through a packing material **320.**

One or more implementations of the SPE apparatus **400** and related methods disclosed herein provide one or more of the following features, advantages, and improvements. A larger surface area for sample adsorption is made available, and the efficiency and sensitivity of the extraction process is increased. The SPE apparatus **400** is capable of handling either liquid-phase or gas-phase samples as desired for a particular procedure, without requiring modification of the SPE apparatus **400** when either liquid-phase or gas-phase sampling is selected. The SPE apparatus **400** is capable of transferring extracted analytes into either an LC or a GC as desired, without requiring modification of the SPE apparatus **400** when either chromatographic mode is selected. The SPE apparatus **400** is capable of sampling dirty sample matrices, such as may contain suspended solids and/or other undesired components, without impairment to the extraction process. The SPE apparatus **400** is capable of implementing thermal and/or liquid desorption of retained analytes as desired. The SPE apparatus **400** does not require the adsorption material **576** to be transitively inserted into and removed from sources of sample matrices (e.g., sample containers 124) and destinations of sample analyte material (e.g., chromatography injection ports 224). The SPE apparatus **400** is capable of simultaneously adsorbing molecules of different chemical classes, and may be utilized for testing a wide variety of sample sources.

Moreover, the SPE apparatus **400** is configured so as to be readily integrated with automated and robotic systems. Such systems may be commercially available or readily adaptable for use in conjunction with the SPE apparatus **400.** Many operational aspects of the SPE apparatus **400** and related methods may be automated and coordinated according to a predetermined program or sequence—such as, for example, movement of the plunger **416** (or operation of any other fluid moving device that may be provided); insertion and removal of the needle **408** into and out from containers, injection ports and the like; movement of the SPE apparatus **400** from one location to another (for example, from a container of sample matrix, to a container of wash or rinse solution, to a container of elution solvent, to an injector or other receptacle, etc.); flow of inert gas utilized for drying, transporting analytes, etc.; control of the heating device **436;** coordination with a downstream analytical instrument such as a chromatograph; and so on. Additionally, the SPE apparatus **400** may be one of several SPE apparatus **400** operated simultaneously or sequentially in a given system, which may provide various manifolds or carousels for supporting multiple SPE apparatus **400.**

It will be understood that the apparatus and methods disclosed herein may be applied to any type of SPE or like process, including normal-phase SPE, reversed-phase SPE, ion-exchange SPE, and others. It will also be understood that the adsorption material utilized in the apparatus may be formulated to extract the undesired components from a given sample matrix, instead of extracting the desired analytes as in the examples given above. The non-extracted analytes may then be collected and transferred to a chromatograph or other desired destination by any suitable means, including by procedures analogous to those described above.

In general, terms such as "communicate" and "in... communication with" (for example, a first component "communicates with" or "is in communication with" a second component) are used herein to indicate a structural, functional, mechanical, electrical, signal, optical, magnetic, electromagnetic, ionic or fluidic relationship between two or more components or elements. As such, the fact that one component is said to communicate with a second component is not intended to exclude the possibility that additional components may be present between, and/or operatively associated or engaged with, the first and second components.

It will be understood that various aspects or details of the invention may be changed without departing from the scope of the invention. Furthermore, the foregoing description is for the purpose of illustration only, and not for the purpose of limitation—the invention being defined by the claims.

The present invention relates to the following items:
1. A solid phase extraction apparatus, comprising:
   a sample adsorption assembly comprising a housing, a proximal housing opening configured for communicating with a fluid moving device, a distal housing opening located at a distance from the proximal housing opening, and an adsorption bar disposed in the housing and comprising an outer surface and an adsorption material coating the outer surface, the adsorption bar having a predominant length in a longitudinal direction and located between the proximal housing opening and the distal housing opening, the outer surface spaced from an inner housing surface of the housing, wherein the sample adsorption assembly comprises a sample adsorption region between the inner housing surface and the outer surface and establishes a fluid flow path from the distal housing opening, through the sample adsorption region along the longitudinal direction, and to the proximal housing opening; and
   a needle communicating with the distal housing opening and disposed outside the housing.
2. The solid phase extraction apparatus of item 1, wherein the outer surface of the adsorption bar has a transverse dimension orthogonal to the longitudinal direction, and the transverse dimension is greater than an inside diameter of the needle by a factor of at least two.
3. The solid phase extraction apparatus of item 1, wherein the adsorption bar is hollow and comprises an inner surface circumscribing an inner conduit, the adsorption material coats both the outer surface and the inner surface, and the inner conduit establishes a fluid flow path through the adsorption bar.
4. The solid phase extraction apparatus of item 1, wherein the adsorption bar comprises a distal end facing the needle, and a channel formed at the distal end and oriented in a direction transverse to the longitudinal direction, and wherein the fluid flow path runs from the distal housing opening, through the channel and into the sample adsorption region.
5. The solid phase extraction apparatus of item 1, wherein the adsorption bar comprises a plurality of splines extending outward from the outer surface and running in the longitudinal direction, and wherein the sample adsorption assembly establishes a plurality of fluid flow paths from the distal housing opening, through a plurality of longitudinal channels between the splines, and to the distal syringe opening.
6. The solid phase extraction apparatus of item 1, wherein the housing comprises a main section surrounding the adsorption bar and a tapered section interposed between the main section and the distal housing opening, the tapered section having an inside diameter that decreases from the main section to the distal housing opening.
7. The solid phase extraction apparatus of item 1, wherein the housing comprises a detent extending from the inner housing surface, and the adsorption bar is disposed on the detent.
8. The solid phase extraction apparatus of item 1, comprising a syringe communicating with the proximal housing opening, the syringe comprising a hollow body and a plunger movable through the body toward and away from the proximal housing opening.
9. The solid phase extraction apparatus of item 8, wherein the syringe comprises a fluid inlet formed through the body, and the plunger is linearly movable from a first position at which the plunger blocks fluid flow from the fluid inlet to the proximal housing opening, to a second position at which the plunger permits fluid flow from the fluid inlet to the proximal housing opening.
10. The solid phase extraction apparatus of item 1, wherein the inner housing surface is coated with the adsorption material.
11. The solid phase extraction apparatus of item 1, wherein the adsorption bar comprises a plurality of adsorption bar segments stacked in the longitudinal direction, each adsorption bar segment coated with an adsorption material having a composition different from the adsorption material of the other adsorption bar segments.
12. The solid phase extraction apparatus of item 1, comprising a heating device in thermal contact with the housing.
13. A method for extracting analytes from a sample matrix by solid phase extraction, the method comprising:
   inserting a needle of a solid phase extraction apparatus into a sample matrix, the solid phase extraction apparatus comprising a housing communicating with the needle, and an adsorption bar disposed in the housing and coated with an adsorption material;
   flowing at least a portion of the sample matrix through the needle, into an adsorption region between the adsorption bar and the housing, and into contact with the adsorption material, wherein analytes of the sample matrix are retained on the adsorption material;
   inserting the needle into an analyte receptacle;
   desorbing the analytes from the adsorption material; and
   transferring the desorbed analytes to the analyte receptacle by flowing a carrier fluid through the housing and the needle.
14. The method of item 13, comprising, before desorbing, purging non-retained components of the sample matrix from the housing and the needle by flowing a wash fluid or a purge gas through the housing and the needle.
15. The method of item 13, wherein flowing the desorbed analytes comprises flowing the carrier fluid from a fluid inlet of the solid phase extraction apparatus, through the housing and the needle, and into the analyte receptacle.
16. The method of item 13, wherein flowing the desorbed analytes comprises flowing the carrier fluid from the analyte receptacle, through the needle and into the housing, followed by flowing the carrier fluid back through the needle and into the analyte receptacle.
17. The method of item 13, wherein flowing the sample matrix into the adsorption region further comprises flowing the sample matrix into contact with an adsorption material disposed on an inner surface of the housing, wherein analytes of the sample matrix are retained on the adsorption material of both the adsorption bar and the inner surface of the housing.
18. The method of item 13, wherein flowing the sample matrix into the adsorption region comprises flowing the sample matrix from the needle in a longitudinal direction to a channel formed at an end of the adsorption bar, through the channel to the adsorption region in a direction transverse to the longitudinal direction, and through the adsorption region in the longitudinal direction.
19. The method of item 13, wherein flowing the sample matrix into the adsorption region comprises flowing the sample matrix from the needle in a longitudinal direction, and through longitudinal passages located in the adsorption region between splines extending outward from the adsorption bar.
20. The method of item 13, wherein the adsorption bar is hollow and comprises an inner surface forming a conduit and an outer surface, and the adsorption material is disposed on the inner surface and on the outer surface, and wherein flowing the sample matrix into the adsorption region comprises flowing the sample matrix along the outer surface and through the conduit, and wherein analytes of the sample matrix are retained on the adsorption material of both the inner surface and the outer surface.

## Claims

1. A solid phase extraction apparatus (400), comprising:
a sample adsorption assembly (440, 740, 940, 1140, 1440) comprising a housing (458, 758, 958, 1158), a proximal housing opening (464, 1464) configured for communicating with a fluid moving device (404, 1404), a distal housing opening (466) located at a distance from the proximal housing opening (464, 1464), and an adsorption bar (462, 762, 962, 1162, 1362) disposed in the housing (458, 758, 958, 1158) and comprising an outer surface (574, 774) and an adsorption material (576, 776) coating the outer surface (574, 774), the adsorption bar (462, 762, 962, 1162, 1362) having a predominant length in a longitudinal direction and located between the proximal housing opening (464, 1464) and the distal housing opening (466), the outer surface (574, 774) spaced from an inner housing surface (468, 768, 968, 1168) of the housing (458, 758, 958, 1158), wherein the sample adsorption assembly (440, 740, 940, 1140, 1440) comprises a sample adsorption region (470, 770, 970) between the inner housing surface (468, 768, 968, 1168) and the outer surface (574, 774) and establishes a fluid flow path from the distal housing opening (466), through the sample adsorption region (470, 770, 970) along the longitudinal direction, and to the proximal housing opening (464, 1464); and
a needle (408) communicating with the distal housing opening (466) and disposed outside the housing (458, 758, 958, 1158).

2. The solid phase extraction apparatus (400) of claim 1, wherein the outer surface (574, 774) of the adsorption bar (462, 762, 962, 1162, 1362) has a transverse dimension orthogonal to the longitudinal direction, and the transverse dimension is greater than an inside diameter of the needle (408) by a factor of at least two.

3. The solid phase extraction apparatus (400) of claim 1 or 2, wherein the adsorption bar (462, 762, 962, 1162, 1362) is hollow and comprises an inner surface (678) circumscribing an inner conduit, the adsorption material (576, 776) coats both the outer surface (574, 774) and the inner surface (678), and the inner conduit establishes a fluid flow path through the adsorption bar (462, 762, 962, 1162, 1362).

4. The solid phase extraction apparatus (400) of any of claims 1-3, wherein the adsorption bar (762) comprises a distal end facing the needle (408), and a channel (786) formed at the distal end and oriented in a direction transverse to the longitudinal direction, and wherein the fluid flow path runs from the distal housing opening (466), through the channel (786) and into the sample adsorption region (470, 770, 970).

5. The solid phase extraction apparatus (400) of any of claims 1-3, wherein the adsorption bar (1162) comprises a plurality of splines (1296) extending outward from the outer surface (574, 774) and running in the longitudinal direction, and wherein the sample adsorption assembly (440, 740, 940, 1140, 1440) establishes a plurality of fluid flow paths from the distal housing opening (466), through a plurality of longitudinal channels (1294) between the splines (1296), and to the proximal housing opening (464, 1464).

6. The solid phase extraction apparatus (400) of any of claims 1-5, comprising a syringe (404, 1404) communicating with the proximal housing opening (464, 1464), the syringe (404, 1404) comprising a hollow body (412) and a plunger (416) movable through the body (412) toward and away from the proximal housing opening (464, 1464).

7. The solid phase extraction apparatus (400) of claim 6, wherein the syringe (404, 1404) comprises a fluid inlet (448) formed through the body (412), and the plunger (416) is linearly movable from a first position at which the plunger (416) blocks fluid flow from the fluid inlet (448) to the proximal housing opening (464, 1464), to a second position at which the plunger (416) permits fluid flow from the fluid inlet (448) to the proximal housing opening (464, 1464).

8. The solid phase extraction apparatus (400) of any of claims 1-7, wherein the inner housing surface (468, 768, 968, 1168) is coated with the adsorption material (576, 776).

9. The solid phase extraction apparatus (400) of any of claims 1-8, wherein the adsorption bar (1362) comprises a plurality of adsorption bar segments (1302, 1306, 1310) stacked in the longitudinal direction, each adsorption bar segment (1302, 1306, 1310) coated with an adsorption material (576, 776) having a composition different from the adsorption material (576, 776) of the other adsorption bar segments (1302, 1306, 1310).

10. A method for extracting analytes from a sample matrix by solid phase extraction, the method comprising:
inserting a needle (408) of a solid phase extraction apparatus (400) into a sample matrix, the solid phase extraction apparatus (400) comprising a housing (458, 758, 958, 1158) communicating with the needle (408), and an adsorption bar (462, 762, 962, 1162, 1362) disposed in the housing (458, 758, 958, 1158) and coated with an adsorption material (576, 776);
flowing at least a portion of the sample matrix through the needle (408), into an adsorption region (470, 770, 970) between the adsorption bar (462, 762, 962, 1162, 1362) and the housing (458, 758, 958, 1158), and into contact with the adsorption material (576, 776), wherein analytes of the sample matrix are retained on the adsorption material (576, 776);
inserting the needle (408) into an analyte receptacle;
desorbing the analytes from the adsorption material (576, 776); and
transferring the desorbed analytes to the analyte receptacle by flowing a carrier fluid through the housing (458, 758, 958, 1158) and the needle (408).

11. The method of claim 10, wherein flowing the desorbed analytes comprises flowing the carrier fluid from a fluid inlet (448) of the solid phase extraction apparatus (400), through the housing (458, 758, 958, 1158) and the needle (408), and into the analyte receptacle; or flowing the desorbed analytes comprises flowing the carrier fluid from the analyte receptacle, through the needle (408) and into the housing (458, 758, 958, 1158), followed by flowing the carrier fluid back through the needle (408) and into the analyte receptacle.

12. The method of claim 10 or 11, wherein flowing the sample matrix into the adsorption region (470, 770, 970) further comprises flowing the sample matrix into contact with an adsorption material (576, 776) disposed on an inner surface (468, 768, 968, 1168) of the housing (458, 758, 958, 1158), wherein analytes of the sample matrix are retained on the adsorption material (576, 776) of both the adsorption bar (462, 762, 962, 1162, 1362) and the inner surface (468, 768, 968, 1168) of the housing (458, 758, 958, 1158).

13. The method of any of claims 10-12, wherein flowing the sample matrix into the adsorption region (470, 770, 970) comprises flowing the sample matrix from the needle (408) in a longitudinal direction to a channel (786) formed at an end of the adsorption bar (762), through the channel (786) to the adsorption region (470, 770, 970) in a direction transverse to the longitudinal direction, and through the adsorption region (470, 770, 970) in the longitudinal direction.

14. The method of any of claims 10-12, wherein flowing the sample matrix into the adsorption region (470, 770, 970) comprises flowing the sample matrix from the needle (408) in a longitudinal direction, and through longitudinal passages (1294) located in the adsorption region (470, 770, 970) between splines (1296) extending outward from the adsorption bar (1162).

15. The method of any of claims 10-14, wherein the adsorption bar (462, 762, 962, 1162, 1362) is hollow and comprises an inner surface (678) forming a conduit and an outer surface (574, 774), and the adsorption material (576, 776) is disposed on the inner surface (678) and on the outer surface (574, 774), and wherein flowing the sample matrix into the adsorption region (470, 770, 970) comprises flowing the sample matrix along the outer surface (574, 774) and through the conduit, and wherein analytes of the sample matrix are retained on the adsorption material (576, 776) of both the inner surface (678) and the outer surface (574, 774).
